(19) **Europäisches Patentamt / European Patent Office / Office européen des brevets**

(11) **EP 2 058 359 B1**

(12) **EUROPEAN PATENT SPECIFICATION**

(45) Date of publication and mention of the grant of the patent:
**03.01.2018 Bulletin 2018/01**

(51) Int Cl.:
***C08J 7/18*** *(2006.01)*    ***B32B 25/08*** *(2006.01)*
***B60C 1/00*** *(2006.01)*

(21) Application number: **08253629.3**

(22) Date of filing: **06.11.2008**

(54) **Innerliner for tire and tire using the same**

Innenauskleidung für Reifen und Reifen, der diese Auskleidung einsetzt

Garniture intérieure et pneu l'utilisant

(84) Designated Contracting States:
**DE ES FR GB IT**

(30) Priority: **06.11.2007 JP 2007288906**
**31.10.2008 JP 2008281361**

(43) Date of publication of application:
**13.05.2009 Bulletin 2009/20**

(73) Proprietor: **Bridgestone Corporation**
**Tokyo 104-8340 (JP)**

(72) Inventors:
• **Takahashi, Yuuwa**
**Kodaira-shi**
**Tokyo 187-8531 (JP)**
• **Nohara, Daisuke**
**Kodaira-shi**
**Tokyo 187-8531 (JP)**

• **Nakagawa, Daisuke**
**Kodaira-shi**
**Tokyo 187-8531 (JP)**
• **Fujino, Kentaro**
**Kodaira-shi**
**Tokyo 187-8531 (JP)**

(74) Representative: **Oxley, Robin John George et al**
**Marks & Clerk LLP**
**90 Long Acre**
**London WC2E 9RA (GB)**

(56) References cited:
**EP-A- 0 102 844      EP-A1- 1 818 187**
**US-A- 3 933 566      US-A- 5 292 590**
**US-A- 5 992 486      US-A1- 2004 140 033**

• **DATABASE WPI Week 199411 Thomson Scientific, London, GB; AN 1994-089102 XP002517020 & JP 06 040207 A (YOKOHAMA RUBBER CO LTD) 15 February 1994 (1994-02-15)**

**Description**

1. Field of the Invention

This invention relates to an innerliner for tire which is capable of adhering to an adjacent rubber member without an adhesive and is excellent in the economic efficiency and resistance to low temperatures and high in the degree of freedom for selecting materials of the adjacent rubber member and a resin layer constituting the innerliner.

2. Description of the Related Art

Heretofore, rubber compositions using a butyl rubber, a halogenated butyl rubber or the like as a main starting material have been used in an innerliner arranged as an air barrier layer inside a tire for keeping an internal pressure of the tire. However, these rubber compositions mainly made from the butyl-based rubber are low in the air barrier property, so that when such a rubber composition is used in the innerliner, a thickness of the innerliner is required to be made to about 1 mm. As a result, the weight of the innerliner occupied in the tire becomes about 5%, which is an obstacle for reducing the tire weight to improve fuel consumption of a vehicle. In order to overcome this problem, there is disclosed an innerliner for a tire wherein the improvement of the air barrier property and the reduction of the weight are established by further disposing a resin layer having a low gas permeability in addition to the rubber member made from the butyl rubber or the like (see JP-A-H06-40207).

In the production of such an innerliner for a pneumatic tire, the resin layer and the adjacent rubber member are adhered with an indirect adhesive or a high polarity rubber such as epoxystyrene-butadiene-styrene rubber or the like (see US Patent laid open No. 2007-0031661). However, the indirect adhesive or the high polarity rubber is expensive and the glass transition temperature as a polymer during the compounding is high, so that when it is used as a tire member, cracking may be caused during the running in the winter season, and the resistance to low temperatures is insufficient.

In order to solve the above problems, there is also developed a method of adhering the adjacent rubber member to the resin layer by subjecting them to an electron beam irradiation at a laminated state to introduce co-crosslinking between the adjacent rubber member and the resin layer.

In this method, however, the adhesion strength is varied depending upon the materials constituting the resin layer and rubber member used, so that the selection of the respective materials is restricted for maintaining the predetermined adhesion strength.

In addition, JP-A-2007-276235 discloses a method wherein a resin laminate of a thermoplastic elastomer is laminated onto a member of a rubber composition and electron beams are irradiated to the resulting resin-rubber laminate as a tire member and then the laminate is vulcanized to introduce crosslinking thereinto. According to this method, however, since carbon-carbon bond and sulfur crosslinking are introduced into the rubber layer by the electron beam irradiation and vulcanization, the network crosslinked structure may become non-uniform and hence the resistance to deterioration of rubber layer may be deteriorated. Also, the tackiness between the resin laminate and the rubber is lacking without using the adhesion layer, and hence the peeling may be caused in the tire building.

EP1818187 discloses a laminate for use as an innerliner for a tire.

SUMMARY OF THE INVENTION

It is, therefore, an object of the invention to provide an innerliner for tire which is capable of adhering to an adjacent rubber member without an expensive adhesive such as an indirect adhesive, a high polarity rubber or the like, and is excellent in the economic efficiency and resistance to low temperatures and high in the degree of freedom for selecting materials of a resin layer and an adjacent rubber member.

The inventors have made various studies in order to achieve the above object and found that an innerliner for tire can be provided by laminating a composition containing an elastomer component onto a resin layer and then irradiating energy beams thereto to form an innerliner capable of adhering to an adjacent rubber member at an improved strength and being excellent in the economic efficiency and resistance to low temperatures and high in the degree of freedom for selecting materials of a resin layer and an adjacent rubber member, and as a result, the invention has been accomplished.

That is, the innerliner for tire according to the invention is defined by claim 1.

In the innerliner for tire according to the invention, the energy beams are preferable to be electron beams.

In a preferable embodiment of the innerliner for tire, an absolute value in difference between SP (solubility parameter) value of a resin constituting the resin layer and SP value of the elastomer component is not more than 9.

In the innerliner for tire, a layer made from the composition containing the elastomer component is co-crosslinked with the adjacent rubber member through vulcanization.

In the innerliner for tire, the elastomer component is a diene-based elastomer.

In the innerliner for tire, the elastomer component comprises a component having a weight average molecular weight of 1000-150000.

In the innerliner for tire, the elastomer component also comprises a component having a weight average molecular weight of 150000-3000000.

Hence, in the innerliner for tire, the elastomer component comprises a mixture of a component having a weight average molecular weight of 1000-150000 and a component having a weight average molecular weight of 150000-3000000.

In a preferable embodiment of the innerliner for tire, the composition contains a tack component.

In another preferable embodiment of the innerliner for tire, the resin layer includes a protection layer made from a thermoplastic elastomer.

In the other preferable embodiment of the innerliner for tire, the thermoplastic elastomer is a thermoplastic urethane elastomer.

In a still further preferable embodiment of the innerliner for tire, the composition containing the elastomer component contains carbon black.

In a preferable embodiment of the innerliner for tire, the composition containing the elastomer component contains a crosslinking agent, a crosslinking accelerator and an accelerator activator.

In another preferable embodiment of the innerliner for tire, the resin layer includes a barrier layer having an oxygen permeation coefficient at 20°C and 65% RH of not more than $9.0 \times 10\text{-}12 \text{ cm}^3 \cdot \text{cm/cm}^2 \cdot \text{sec} \cdot \text{cmHg}$.

In the other preferable embodiment of the innerliner for tire, the barrier layer includes any one of ethylene-vinyl alcohol copolymer, a modified ethylene-vinyl alcohol copolymer and a polyamide.

Also, the tire according to the invention comprises a pair of bead portions, a pair of sidewall portions, a tread portion communicating with both the sidewall portions, a carcass toroidally extending between the bead portions to reinforce the above portions, and a belt disposed on an outside of a crown portion of the carcass in a radial direction, characterized in that an innerliner for tire as described in any one of the above items is disposed in an inner face of the tire inside the carcass.

A method of producing an innerliner for tire according to the invention is defined in claim 3.

In a preferable embodiment of the production method of the innerliner for tire, the energy beams are preferable to be electron beams.

In another preferable embodiment of the production method of the innerliner for tire, an absolute value in difference between SP (solubility parameter) value of a resin constituting the resin layer and SP value of the elastomer component is not more than 9.

In the production method of the innerliner for tire, a layer made from the composition containing the elastomer component is co-crosslinked with the adjacent rubber member through vulcanization.

In the production method of the innerliner for tire, the elastomer component is a diene-based elastomer.

In the production method of the innerliner for tire, the elastomer component comprises a component having a weight average molecular weight of 1000-150000.

In the production method of the innerliner for tire, the elastomer component also comprises a component having a weight average molecular weight of 150000-3000000.

Hence, in the production method of the innerliner for tire, the elastomer component comprises a mixture of a component having a weight average molecular weight of 1000-150000 and a component having a weight average molecular weight of 150000-3000000.

In a preferable embodiment of the production method of the innerliner for tire, the composition contains a tack component.

In another preferable embodiment of the production method of the innerliner for tire, the resin layer includes a protection layer made from a thermoplastic elastomer.

In the other preferable embodiment of the production method of the innerliner for tire, the thermoplastic elastomer is a thermoplastic urethane elastomer.

In a still further preferable embodiment of the production method of the innerliner for tire, the composition containing the elastomer component contains carbon black.

In a preferable embodiment of the production method of the innerliner for tire, the composition containing the elastomer component contains a crosslinking agent, a crosslinking accelerator and an accelerator activator.

In another preferable embodiment of the production method of the innerliner for tire, the resin layer includes a barrier layer having an oxygen permeation coefficient at 20°C and 65% RH of not more than $9.0 \times 10\text{-}12 \text{ cm}^3 \cdot \text{cm/cm}^2 \cdot \text{sec} \cdot \text{cmHg}$.

In the other preferable embodiment of the production method of the innerliner for tire, the barrier layer includes any one of ethylene-vinyl alcohol copolymer, a modified ethylene-vinyl alcohol copolymer and a polyamide.

Also, a method of producing a tire according to the invention comprising a pair of bead portions, a pair of sidewall portions, a tread portion communicating with both the sidewall portions, a carcass toroidally extending between the bead portions to reinforce the above portions, and a belt disposed on an outside of a crown portion of the carcass in a radial direction, characterized in that an innerliner for tire produced by a production method of an innerliner for tire as described in any one of the above items is disposed in an inner face of the tire inside the carcass.

According to the invention, there can be provided an innerliner for tire which is adhered to an adjacent rubber member without an expensive adhesive such as an indirect adhesive, a high polarity rubber or the like, and is excellent in the economic efficiency and resistance to low temperatures and high in the degree of freedom for selecting materials of a resin layer and an adjacent rubber member.

BRIEF DESCRIPTION OF THE DRAWING

The invention will be described with reference to the accompanying drawing, wherein

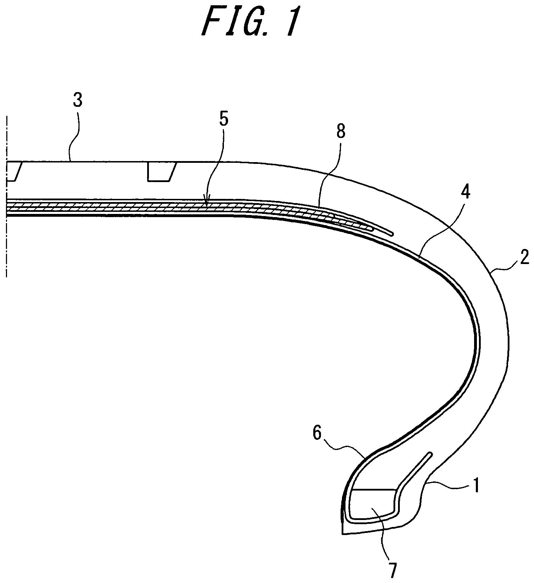

FIG. 1 is a partial section view of an embodiment of the tire according to the invention.

DESCRIPTION OF THE PREFERRED EMBODIMENTS

The innerliner for tire according to the invention is produced by laminating a composition containing an elastomer component onto a resin layer and then irradiating energy beams required for generating partial crosslinking between the resin layer and the elastomer component. In this way, the composition is laminated onto the resin layer and then the energy beams are irradiated thereto to co-crosslink the resin layer and the elastomer component to thereby conduct the adhesion. Namely, the composition containing the elastomer component is strongly adhered to the resin layer by co-crosslinking the elastomer component and the resin constituting the resin layer while crosslinking the elastomer component. At this moment, a dose of the energy beams irradiated is 1-600 kGy for co-crosslinking the resin layer and the elastomer component. When the dose is less than 1 kGy, the co-crosslinking is insufficient and the resin layer and the composition may be separated from each other, while when it exceeds 600 kGy, the resin layer and the composition may be easily deteriorated and further the crosslinking in the elastomer is proceeding and hence the elastomer component can not be co-vulcanized with the adjacent rubber member during the vulcanization.

The term "energy beams" used herein means electromagnetic waves or the like dissociating molecular chains to generate radicals. The energy beams are not particularly limited, but include electron beams, gamma ray, ultraviolet ray, far-infrared ray and so on. In the invention, it is inconvenient to use the ultraviolet ray or the gamma ray because the irradiation of the ultraviolet ray is required to add a chemical agent for curing promotion, and the irradiation of the gamma ray is required to use isotope. On the other hand, the use of the electron beams is convenient in the invention because the irradiation of the electron beams does not necessarily require the addition of the chemical agent or the use of isotope and can be switched instantly. Further, the electron beams have a merit that a dose rate is larger than that of the gamma ray. Therefore, the use of electron beams is preferable as the energy beams.

In the aforementioned JP-A-2007-276235, since the adjacent rubber member and the resin laminate of the elastomer component are subjected to electron beam irradiation and then vulcanized, carbon-carbon bond and sulfur crosslinking are introduced between the rubber member and the resin laminate and hence the network crosslinked structure becomes non-uniform and the resistance to deterioration of rubber layer may be deteriorated. On the contrary, according to the invention, only sulfur crosslinking is introduced between the adjacent rubber member and the composition containing the elastomer component after the irradiation of electron beam and the vulcanization, so that the network crosslinked structure becomes uniform and the resistance to deterioration of rubber layer is high as compared with the case of JP-A-2007-276235.

As a resin constituting the resin layer, mention may be made of a thermoplastic urethane-based elastomer, polystyrene-poly(ethylene/butylene)block-polystyrene copolymer, nylon-6, nylon-6,6, polybutadiene resin, maleic anhydride-modified polyethylene, maleic anhydride-modified polybutadiene, ethylene-vinyl alcohol copolymer (EVOH), a modified EVOH, polyethylene, polypropylene, polyethylene terephthalate (PET), vinylidene chloride, polybutylene terephthalate (PBT), a vinyl acetate-based resin and so on. Among them, the modified EVOH is preferable because it is excellent in the air barrier property and can largely improve the property of holding the tire internal pressure.

As the elastomer component used in the composition, elastomers having a diene skeleton such as polyisoprene rubber(e.g. natural rubber), styrene-butadiene copolymer, styrene-isoprene-butadiene copolmer, styrene-butadiene-acrylonitrile copolymer, ethylene-propylene-diene terpolymer, polyisobutylene, isobutylene-isoprene copolymer, polybutadiene rubber, butyl rubber and so on; o. The diene-based elastomers are used because they are excellent in the co-crosslinking property with different or same rubber in a sulfur crosslinking system and are electron beam-crosslinking type. Also, the main chain skeleton of the elastomer component is preferable to be polyisoprene, styrene-butadiene copolymer or polybutadiene. Moreover, the diene-based elastomer may be a block copolymer, which includes, for example, SBS, styrene-isoprene-styrene block copolymer (SIS) and the like. In addition, the elastomer component may be partially hydrogenated.

The elastomer component comprises a component having a weight average molecular weight of 1000-150000, preferably 3000-120000, more preferably 3500-100000. Also, the elastomer component comprises a component having a weight average molecular weight of 150000-3000000. Hence, the elastomer component comprises a mixture of a component having a weight average molecular weight of 1000-150000 and a component having a weight average molecular weight of 150000-3000000. When the weight average molecular weight of the elastomer component is less than 1000, the strength at rapture of the composition is insufficient, while when it exceeds 3000000, the tackiness of the composition is insufficient. At this moment, the component having the weight average molecular weight of 1000-150000 has a function of providing the tackiness, while the component having the weight average molecular weight of 150000-3000000 has a function of increasing the strength at rapture. As such components may be used the same main chain structure as mentioned in the elastomer component.

Further, the composition is preferable to contain a tack component. The tack component is preferable to be ones known as a tackifier and is not particularly limited, but includes gum rosin, tall oil rosin, wood rosin, hydrogenated rosin, disproportionated rosin, polymerized rosin, rosin glycerin ester, hydrogenated rosin-pentaerithritol ester and the like as a natural substance or a derivative thereof; and synthetic resins such as petroleum resin, cumarone indene resin, styrene-based resin, phenolic resin, xylene resin and so on.

The dose of electron beams is preferably 5-600 kGy, more preferably 10-500 kGy. When the dose of electron beams is less than 5 kGy, the crosslinking is hardly proceeding, while when it exceeds 600 kGy, the deterioration of the shaped body composed of the composition and the resin is easily proceeding.

The form of the composition including the elastomer component is not particularly limited, but may be a film or a liquid. When the composition is a liquid, it is preferable that the composition is coated onto the resin layer and then subjected to the irradiation of electron beam, after the drying if it contains a solvent. In the case of the liquid composition containing the solvent, as far as the elastomer component may be dispersed or dissolved, the solvent is not particularly limited, but an organic solvent such as toluene or the like is preferably mentioned.

Moreover, the absolute value in the difference between SP value of the resin constituting the resin layer and SP value of the elastomer component is preferably not more than 9, more preferably not more than 8, further preferably not more than 6, particularly preferably not more than 4.37. Thus, when the difference of SP value between the resin and the elastomer is small, the compatibility of the elastomer with the resin becomes higher and the interaction such as co-crosslinking or the like can be more introduced, and hence the adhesiveness between the resin and the composition can be enhanced. Also, the elastomer can be selected depending on the materials of the resin and the adjacent rubber member used, so that the degree of freedom for selecting the materials is high.

In the innerliner for tire and the production method thereof according to the invention, the composition including the elastomer component is preferable to be co-crosslinked with the adjacent rubber member. Since the composition including the elastomer component has a tackiness, it is physically adhered to the adjacent rubber member, but the co-crosslinking is introduced therebetween by vulcanization to further enhance the adhesion.

In the innerliner for tire and the production method thereof according to the invention, the resin layer is preferable to include a layer made from a thermoplastic elastomer (TPE). As the thermoplastic elastomer is preferable a thermoplastic urethane-based elastomer. When the resin layer includes the layer of the thermoplastic elastomer, a barrier portion in the resin layer is thinned, while the occurrence or growth of cracks in the barrier layer can be suppressed. The thermoplastic urethane-based elastomer is obtained by the reaction of a polyol, an isocyanate compound and a short chain diol. The polyol and short chain diol form a straight chain polyurethane through an addition reaction with the isocyanate compound. In the thermoplastic urethane-based elastomer, the polyol constituted a soft portion and the isocyanate compound and short chain diol constitute a hard portion. Moreover, the properties of the thermoplastic urethane-based elastomer can be widely changed by varying the kind of starting materials, amounts of starting materials compounded, polymerization conditions and the like.

In the innerliner for tire and the production method thereof according to the invention, the composition including the elastomer component is preferable to contain carbon black. In this case, the strength of the composition is increased and hence the adhesion force between the resin layer and the elastomer can be increased.

In the innerliner for tire and the production method thereof according to the invention, the composition including the elastomer component is further preferable to contain a crosslinking agent, a crosslinking accelerator and an accelerator activator. Thus, the crosslinking efficiency during the vulcanization can be enhanced by adding the crosslinking agent, crosslinking accelerator and accelerator activator to the composition including the elastomer component. As the crosslinking agent is generally used sulfur for adjusting the crosslinking rate and Young's modulus. As the crosslinking accelerator are mentioned diphenylguanidine (DPG), tetramethylthiuram disulfide (TMTD), tetramethylthiuram monosulfide (TMTM), zinc 2-mercaptobenzothiazole (ZnBDC), 2-mercaptobenzothiazole (MBT), 2-benzothiazolyl disulfide (MBTS), N-cyclohexyl-2-benzothiazole sulfenamide (CBS), N-t-butyl-2-benzothiazole sulfenamide (BBS) and so on. As the accelerator activator are mentioned zinc white (zinc oxide) and the like.

In the innerliner for tire and the production method thereof according to the invention, the resin layer is preferable to contain a barrier layer having an oxygen permeation coefficient at 20°C and 65% RH of not more than $9.0 \times 10^{-12}$ cm$^3$ • cm/cm$^2$ • sec • cmHg. The oxygen permeation coefficient of the barrier layer is more preferably not more than $1.0 \times 10^{-12}$ cm$^3$ • cm/cm$^2$ • sec • cmHg, and further preferably not more than $5.0 \times 10^{-13}$ cm$^3$ • cm/cm$^2$ • sec • cmHg. The term "oxygen permeation coefficient" is used as a typical value indicating the gas permeation property of the resin layer. When the oxygen permeation coefficient at 20°C and 65% RH exceeds $9.0 \times 10^{-12}$ cm$^3$ • cm/cm$^2$ • sec • cmHg, if the resin layer is used in the innerliner, it is obliged to make the thickness of the resin layer thicker for enhancing the internal pressure holding property of the tire (air barrier property), and hence the weight of the tire can not be reduced sufficiently.

The barrier layer is desirable to have a structure capable of co-crosslinking with the elastomer component through the irradiation of energy beams. If the barrier layer can not be co-crosslinked with the elastomer component through the energy beams, or when the barrier layer is an inorganic filler or an inorganic deposited coating (aluminum oxide or the like), it is possible that the inorganic coating is disposed on TPE capable of co-crosslinking with the elastomer component through the energy beams so as to adjoin the elastomer component to TPE. Even if the barrier layer can be crosslinked through energy beams, TPE may be adjoined to the barrier layer. Because, the barrier performance may be somewhat lowered when the barrier layer is co-crosslinked with the elastomer component through energy beams, but such a lowering of the barrier performance can be prevented by adjoining the barrier layer to TPE. As the barrier layer capable of co-crosslinking with the elastomer component through the irradiation of energy beams is preferable a layer containing at least one of ethylene-vinyl alcohol copolymer, a modified ethylene-vinyl alcohol copolymer and a polyamide. These polymers are a material having a high gas barrier property enough to be used as a food packaging material, which are preferable for satisfying the performances required in the innerliner for tire. Moreover, TPE is preferable to have a soft segment of energy beam crosslinking type, which includes styrene-ethylene-butylene-styrene block copolymer (SEBS), a thermoplastic polyurethane (TPU), polyethylene (PE) and the like.

The tire according to the invention is preferable to be provided with the aforementioned innerliner for tire and be produced by using such an innerliner for tire. The tire according to the invention will be described in detail with reference to the accompanying drawing. FIG. 1 is a partial section view of an embodiment of the tire according to the invention. The tire shown in FIG. 1 comprises a pair of bead portions 1, a pair of sidewall portions 2, a tread portion 3 communicating with both the sidewall portions 2, a carcass 4 toroidally extending between the pair of the bead portions 1 to reinforce these portions 1, 2, 3, and a belt 5 disposed outside a crown portion of the carcass 4 in a radial direction of the tire and comprised of two belt layers and further includes an innerliner 6 disposed at an inner face of the tire inside the carcass 4.

In the illustrated tire, the carcass 4 is comprised of a main body portion toroidally extending between a pair of bead cores 7 embedded in the respective bead portions 1 and a turnup portion wound around the bead core 7 from a widthwise inside of the tire toward an outside thereof outward in the radial direction. In the tire according to the invention, the ply number and structure of the carcass 4 are not limited to the illustrated embodiment.

Further, the belt 5 in the illustrated tire is comprised of two belt layers, but the number of the belt layers constituting the belt 5 is not limited thereto. At this moment, the belt layer is usually a rubberized layer of cords each extending obliquely with respect to an equatorial plane of the tire, so that the belt 5 is comprised of the two belt layers laminated so as to cross the cords of the belt layers with each other with respect to the equatorial plane. Moreover, the illustrated tire is provided with a belt reinforcing layer 8 disposed on the radially outside of the belt 5 so as to cover the whole of the belt 5. However, the tire according to the invention may or may not be provided with the belt reinforcing layer 8, and can be provided with a belt reinforcing layer of another structure. In this case, the belt reinforcing layer 8 is typically a rubberized layer of cords extending substantially in parallel to each other with respect to a circumferential direction of the tire.

By using the innerliner for tire according to the invention can be provided tires having excellent economic efficiency and resistance to low temperatures but also an excellent fuel consumption efficiency because the structure of the innerliner is relatively simple and the weight thereof is reduced. Into the tire according to the invention is filled a gas such as air, nitrogen, helium or the like, but air is frequently filled in view of the cost.

The innerliner for tire according to the invention is a resin having a tackiness from another standpoint. Therefore, the innerliner for tire according to the invention can be used in another applications requiring a tacky resin by properly selecting the resin and the composition as mentioned above.

The following examples are given in illustration of the invention and are not intended as limitations thereof. Also, it is possible to properly modify the embodiment within a scope not changing the summary of the invention.

(Method of preparing resin layer 1)

Into a pressure reaction tank are charged 2 parts by mass of ethylene-vinyl alcohol copolymer having an ethylene content of 44 mol% and a saponification degree of 99.9% (MFR at 190°C under a load of 2160 g: 5.5 g/10 minutes) and 8 parts by mass of N-methyl-2-pyrrolidone, which are stirred under heating at 120°C for 2 hours to completely dissolve ethylene-vinyl alcohol copolymer. To the resulting solution is added 0.4 part by mass of epoxypropane and heated at 160°C for 4 hours. After the completion of the heating, the reaction mass is precipitated into 100 parts by mass of a distilled water, and N-methyl-2-pyrrolidone and unreacted epoxypropane are washed out with a greater amount of a distilled water to obtain a modified ethylene-vinyl alcohol copolymer. Then, the thus modified ethylene vinyl alcohol copolymer is finely pulverized to a particle size of about 2 mm in a grinder and again washed with a greater amount of a distilled water sufficiently. After the washing, the particles are dried at room temperature under vacuum for 8 hours and melted at 200°C in a biaxial extruder to obtain pellets. The pellets are used in a film-forming machine comprising an extruder of 40 mmf (PLABOR GT-40-A made by Plastic Engineering Laboratory Co., Ltd.) and a T-die under the following extruding conditions to obtain a single resin layer 1 of 20 $\mu$m in thickness.

Type: uniaxial extruder (non-belt type)
L/D: 24
Gauge: 40 mmf
Screw: single full-light type, nitriding steel at surface
Revolution number of screw: 40 rpm
Die: coat hunger die of 550 mm in width
Lip interval: 0.3 mm
Temperature setting of cylinder, die: C1/C2/C3/adapter/die = 180/200/210/210/210 (°C)

(Method of preparing resin layer 2)

A resin layer 2 is prepared in the same manner as in the resin layer 1 except that ethylene-vinyl alcohol copolymer having an ethylene content of 32 mol% and a saponification degree of 99.9% (MFR at 190°C under a load of 2160 g: 7.0 g/10 minutes) is used instead of the ethylene-vinyl alcohol copolymer having an ethylene content of 44 mol% and a saponification degree of 99.9% (MFR at 190°C under a load of 2160 g: 5.5 g/10 minutes).

(Method of preparing resin layer 3)

A resin composition is obtained by milling 80 mass% of the pellets obtained in the production method of the resin layer 1 and 20 mass% of pellets obtained by synthesizing and pelletizing maleic anhydride-modified hydrogenated styrene-ethylene-butadiene-styrene block copolymer through a well-known method in a biaxial extruder. The resulting resin composition and a thermoplastic polyurethane (TPU) [KRAMIRON 3190, made by Kuraray Co., Ltd.) are used to prepare a resin layer 3 (thermoplastic polyurethane layer/resin composition layer/thermoplastic polyurethane layer, thickness 20/20/20 ($\mu$m)) with two-type, three-layer co-extruding apparatus under the following co-extruding shaping conditions.

Extruding temperatures of resins: C1/C2/C3/die = 170/170/200/200°C Specification of extruder for each resin:
Thermoplastic polyurethane: 25 mm$\phi$ extruder P25-18AC (made by Ohsaka Seiki Kosaku Co., Ltd.)
Resin composition (D) or modified EVOH (B): 20 mm$\phi$ extruder laboratory machine ME model CO-EXT (made by Toyo Seiki Co., Ltd.) Specification of T-die: for two-type, three-layer of 500 mm in width (made by Plastic Engineering Laboratory Co., Ltd.)

Temperature of cooling roll: 50°C
Pick-up rate: 4 m/min

(Method of preparing adjacent rubber member 1)

An adjacent rubber member 1 is prepared according to a compounding recipe shown in Table 1.

Table 1

|  | parts by mass |
|---|---|
| Butyl rubber *1 | 100 |
| N-550 (carbon black) | 50 |
| Stearic acid *2 | 2 |
| Zinc white *3 | 3 |
| Vulcanization accelerator *4 | 1 |

(continued)

| | parts by mass |
|---|---|
| Sulfur | 0.5 |

| *1: Exxon BROMO BUTYL 222, made by Exxon Mobile CHEMICAL<br>*2: 50S, made by Shi-Nippon Rika Co., Ltd.<br>*3: Two kinds of zinc white, powder, made by Hakusui Tech Co., Ltd.<br>*4: Nocceler DM, made by Ohuchi-Shinko Kagaku Kogyo Co., Ltd. |
|---|

(Method of preparing adjacent rubber member 2)

An adjacent rubber member 2 is prepared according to a compounding recipe shown in Table 2.

Table 2

| | Parts by mass |
|---|---|
| NR *1 | 50 |
| SBR *2 | 68.75 |
| GPF N-660 (carbon black) *3 | 43 |
| Process oil *4 | 8 |
| Antioxidant *5 | 1.5 |
| Stearic acid *6 | 1.5 |
| Zinc white *7 | 4 |
| Vulcanization accelerator *8 | 0.5 |
| Vulcanization accelerator *9 | 1 |
| Sulfur | 2.66 |

| *1: RSS No.3<br>*2: SBR 1712 (extended with 18.75 parts by mass of aromatic oil), made by JSR Corporation<br>*3: 50S, made by Asahi Carbon Co., Ltd.<br>*4: Sundex 790, made by SUN OIL COMPANY<br>*5: Nocrac 224-S, made by Ohuchi-Shinko Kagaku Kogyo Co., Ltd. 2,2,4-trimethyl-1,2-dihydroquinoline polymer<br>*6: 50S, made by Shin-Nippon Rika Co., Ltd.<br>*7: two kinds of zinc white, powder, made by Hakusui Tech Co., Ltd.<br>*8: Accel M, made by Kawaguchi Kagaku Kogyo Co., Ltd. 2-mercaptobenzothiazole<br>*9: Accel CZ, made by Kawaguchi Kagaku Kogyo Co., Ltd. N-cyclohexyl-2-benzothiazole sulfenamide |
|---|

(Test method for tackiness)

A probe tack test is carried out according to JIS Z0237 with respect to a test sample for the measurement of tackiness. The tackiness is represented by an index on the basis that the measured value of Comparative example 1 is 100.

(Test method for bonding property between elastomer-resin layers)

The bonding property is evaluated by immersing a member A as mentioned later in toluene, wherein a sample when the composition layer on the member a is swollen but is not dissolved out (elastomer is not extracted with toluene) is good and a sample when the composition layer on the member A is dissolved out (elastomer is extracted with toluene) is bad.

(Evaluation method for internal pressure holding property)

The test tire inflated under an air pressure of 140 kPa is run on a rotating drum corresponding to a speed of 80 km/h under a load of 6 kN over 10,000 km. Then, the internal pressure holding property is evaluated under the following conditions by using a non-run test tire and the test tire run under the above conditions. That is, the internal pressure holding property is evaluated according to the following equation after the test tire is mounted on a rim of 6JJx15 under an internal pressure of 240 kPa and then an internal pressure with lapse of 3 months is measured through the above running:

$$\text{Internal pressure holding property} = ((240 - b)/(240 - a)) \times 100$$

(wherein a is an internal pressure of a test tire after 3 months and b is an internal pressure of a non-run tire described in the following Comparative Example 1 (pneumatic tire using a usual rubber innerliner) after 3 months). The internal pressure holding property is represented by an index on the basis that the measured value of Comparative Example 1 is 100.

(Evaluation method of appearance after running)

An appearance after the running is evaluated by visually observing the inner face of the tire to measure the peeling or non-peeling of the innerliner.

Example 1 (Reference)

Onto the resin layer 1 of 20 cm x 10 cm prepared by the above method is applied a solution of 40 g of IR 2200 (polyisoprene, made by JSR Corporation, weight average molecular weight: 1400000) in 500 ml of toluene as a composition, which is then dried sufficiently. Thereafter, electron beams are irradiated with an electron beam irradiating apparatus "Curetoron for production EBC200-100", made by Nisshin High-Voltage Co., Ltd. at a dose shown in the following table (acceleration voltage: 200 kV) to obtain a member A. With respect to the thus obtained member A, the test for tackiness and the test for the bonding property between elastomer-resin layers are carried out by the aforementioned methods. As the bonding property, the adjacent rubber member 1 produced by the above method is laminated on the composition applied face of the member A to form a composite and then the resulting composite is subjected to a T-type peeling test according to JIS K6854 to measure a peeling resistance. The measured value is represented by an index on the basis that the peeling resistance of Comparative Example 1 is 100. Further, the member A is arranged as an innerliner over a full inner face of an uncured tire and then vulcanized under usual vulcanization conditions to obtain a tire for passenger car (195/65R15). With respect to the thus obtained tire, the internal pressure holding property and appearance after running are measured and observed by the above methods. The results are shown in Table 3. At this moment, the molecular weight of the elastomer component is a weight average molecular weight (Mw) converted to polystyrene as measured by using a gel permeation chromatography (GPC).

Example 2

This example is carried out by the method of Example 1 except that a blend of 40 g of IR 2200 and 10 g of LIR 30 (polyisoprene, made by Kuraray Co., Ltd.) is used instead of 40 g of IR 2200. The results are shown in Table 3.

Example 3 (Reference)

This example is carried out by the method of Example 1 except that a blend of 40 g of IR 2200 and 10 g of Koresin (made by Akron Chem.) is used instead of 40 g of IR 2200. The results are shown in Table 3.

Example 4 (Reference)

This example is carried out by the method of Example 1 except that a blend of 40 g of IR 2200 and 17.2 g of carbon black (CB) is used instead of 40 g of IR 2200. The results are shown in Table 3.

Example 5 (Reference)

This example is carried out by the method of Example 1 except that a blend of 40 g of IR 2200, 17.2 g of carbon black, 1.0 g of sulfur (crosslinking agent), 0.2 g of Accel M, made by Kawaguchi Kagaku Kogyo Co., Ltd. and 0.4 g of Accel CZ, made by Kawaguchi Kagaku Kogyo Co., Ltd. as a crosslinking accelerator, and 1.6 g of zinc oxide, made by Hakusui Tech Co., Ltd. as a crosslinking accelerator is used instead of 40 g of IR 2200 and the dose of electron beams is 25 kGy. The results are shown in Table 3.

Example 6 (Reference)

This example is carried out by the method of Example 5 except that the dose of electron beam is 100 kGy. The results are shown in Table 3.

Example 7 (Reference)

This example is carried out by the method of Example 1 except that the adjacent rubber member 2 is used instead of the adjacent rubber member 1. The results are shown in Table 4.

Example 8

This example is carried out by the method of Example 5 except that 10 g of liquid IR (liquid polyisoprene, weight average molecular weight: 29000) is added to the blend and the adjacent rubber member 2 is used instead of the adjacent rubber member 1. The results are shown in Table 4.

Example 9 (Reference)

This example is carried out by the method of Example 5 except that 10 g of Koresin is added to the blend and the adjacent rubber member 2 is used instead of the adjacent rubber member 1. The results are shown in Table 4.

Example 10 (Reference)

This example is carried out by the method of Example 1 except that SBR (#1500, weight average molecular weight: 444000) is used instead of IR. The results are shown in Table 4.

Example 11 (Reference)

This example is carried out by the method of Example 9 except that the resin layer 3 is used instead of the resin layer 1. The results are shown in Table 4.

Example 12 (Reference)

This example is carried out by the method of Example 1 except that liquid IR is used instead of IR 2200. The results are shown in Table 4.

Comparative Example 1

This example is carried out by the method of Example 1 except that the composition is applied onto the resin layer 1 after the irradiation of electron beams (i.e. electron beams are irradiated to only the resin layer 1). The results are shown in Table 4.

Comparative Example 2

This example is carried out by the method of Comparative Example 1 except that the resin layer 2 is adhered to the adjacent rubber member 1 through Metalock R30M (made by Toyo Kagaku Laboratory). The results are shown in Table 4.

Table 3

| Examples marked with a "*" are included by way of reference. | | | | | | |
|---|---|---|---|---|---|---|
| | Example 1* | Example 2 | Example 3* | Example 4* | Example 5* | Example 6* |
| Kind of resin layer | resin layer 1 | resin layer 1 | resin layer 1 | resin layer 1 | resin layer 1 | resin layer 1 |

(continued)

| Examples marked with a "*" are included by way of reference. | | | | | | |
|---|---|---|---|---|---|---|
| | Example 1* | Example 2 | Example 3* | Example 4* | Example 5* | Example 6* |
| Composition including elastomer component to be laminated on resin layer *10 | IR 2200 | IR 2200 + LIR 30 | IR 2200 + resin | IR 2200 + CB | IR 2200 + CB + crosslinking agent + crosslinking accelerator | IR 2200 + CB + crosslinking agent + crosslinking accelerator |
| SP value of resin layer | 13.04 | 13.04 | 13.04 | 13.04 | 13.04 | 13.04 |
| SP value of elastomer component | 8.67 | 8.67 | 8.67 | 8.67 | 8.67 | 8.67 |
| Difference of SP value between resin layer and elastomer component | 4.37 | 4.37 | 4.37 | 4.37 | 4.37 | 4.37 |
| Dose of electron beams (kGy) | 300 | 300 | 300 | 400 | 25 | 100 |
| Kind of adjacent rubber member | adjacent rubber member 1 | adjacent rubber member 1 | adjacent rubber member 1 | adjacent rubber member 1 | adjacent rubber member 1 | adjacent rubber member 1 |
| Test for tackiness (index) | 100 | 120 | 125 | 90 | 100 | 99 |
| Peeling resistance (index) | 100 | 98 | 99 | 110 | 120 | 117 |
| Bonding property between elastomer and resin layer | good | good | good | good | good | good |
| Internal pressure holding property (index) | non-run tire | 430 | | | | | |
| | tire after running | 425 | | | | | |
| Appearance after running | | no peeling | | | | | |
| *10 The weight average molecular weight is 1400000 in IR 2200, 440000 in SBR and 29000 in liquid IR. | | | | | | |

Table 4

| | Example 7* | Example 8 | Example 9* | Example 10* | Example 11* | Example 12* | Comparative Example 1 | Comparative Example 2 |
|---|---|---|---|---|---|---|---|---|
| Kind of resin layer | resin layer 1 | resin layer 1 | resin layer 1 | resin layer 2 | resin layer 3 | resin layer 1 | resin layer 1 | resin layer 2 |
| Composition including elastomer component to be laminated on resin layer *10 | IR 2200 | IR + CB + crosslinking agent + crosslinking accelerator + liquid IR | IR + CB + crosslinking agent + crosslinking accelerator + resin | SBR | IR 2200 + CB + crosslinking agent + crosslinking accelerator | liquid IR | IR | application of Metalock |
| SP value of resin layer | 13.04 | 13.04 | 13.04 | 13.04 | 9-12 *11 | 13.04 | 13.04 | - |
| SP value of elastomer component | 8.67 | 8.67 | 8.67 | 9.00 | 8.67 | 8.67 | - | - |
| Difference of SP value between resin layer and elastomer component | 4.37 | 4.37 | 4.37 | 4.04 | 0.33-3.33 | 4.37 | - | - |
| Dose of electron beams (kGy) | 300 | 300 | 300 | 300 | 300 | 300 | 300 (only resin layer) | 300 (only resin layer) |
| Kind of adjacent rubber member | adjacent rubber member 2 | adjacent rubber member 2 | adjacent rubber member 2 | adjacent rubber member 1 | adjacent rubber member 1 | adjacent rubber member 1 | adjacent rubber member 1 | adjacent rubber member 1 |
| Test for tackiness (index) | 99 | 98 | 99 | 101 | 98 | 101 | 100 | 2 |
| Peeling resistance (index) | 120 | 130 | 132 | 120 | 135 | 95 | 2 | 100 |
| Bonding property between elastomer and resin layer | good | good | good | good | good | good | poor | |
| Internal pressure holding property (index) | non-run tire | | | | | 432 | | 430 | |
| | tire after running | | | | | 426 | | 100 | |
| Appearance after running | | | | | | no peeling | | peeling | |

*10 The weight average molecular weight is 1400000 in IR 2200, 440000 in SBR and 29000 in liquid IR.

*11: Particular value can not be calculated due to the complicated molecular structure

As seen from Tables 3 and 4, all of Examples are excellent in the tackiness, peeling resistance and bonding property between elastomer and resin layer as compared with those of Comparative Examples. Furthermore, the tire produced by using the innerliner of each Example is excellent in the internal pressure holding property as compared with the tire produced by using the innerliner of each Comparative Example, and also the appearance after the running is good without peeling.

**Claims**

1. An innerliner for a tire formed by laminating a composition containing an elastomer component comprised of a diene-based elastomer onto a resin layer and then irradiating energy beams required for generating partial crosslinking between the resin layer and the elastomer component,
   wherein the dose of the energy beam is 1-600 kGy and a layer made from the composition containing the elastomer component is co-crosslinked with an adjacent rubber member through vulcanization and wherein the elastomer component comprises a mixture of an elastomer component having a weight average molecular weight converted to polystyrene as measured by using a gel permeation chromatography (GPC) of 1000-150000 and an elastomer component having a weight average molecular weight converted to polystyrene as measured by using a gel permeation chromatography (GPC) of 150000-3000000.

2. A tire comprising a pair of bead portions (1), a pair of sidewall portions (2), a tread portion (3) communicating with both the sidewall portions, a carcass (4) toroidally extending between the bead portions to reinforce said portions (1, 2, 3), and a belt (5) disposed on an outside of a crown portion of the carcass in a radial direction, **characterized in that** an innerliner (6) for a tire as claimed in claim 1 is disposed in an inner face of the tire inside the carcass.

3. A method of producing an innerliner for a tire, which comprises laminating a composition containing an elastomer component comprised of a diene-based elastomer onto a resin layer and then irradiating energy beams required for generating partial crosslinking between the resin layer and the elastomer component,
   wherein the dose of the energy beams is 1-600 kGy and a layer made from the composition containing the elastomer component is co-crosslinked with an adjacent rubber member through vulcanization and
   wherein the elastomer component comprises a mixture of an elastomer component having a weight average molecular weight converted to polystyrene as measured by using a gel permeation chromatography (GPC) of 1000-150000 and an elastomer component having a weight average molecular weight converted to polystyrene as measured by using a gel permeation chromatography (GPC) of 150000-3000000.

4. A method according to claim 3, wherein the energy beams are electron beams.

5. A method according to claim 3, wherein an absolute value in difference between SP (solubility parameter) value of a resin constituting the resin layer and SP value of the elastomer component is not more than 9.

6. A method according to claim 3, wherein the composition contains a tack component.

7. A method according to claim 3, wherein the resin layer includes a protection layer made from a thermoplastic elastomer.

8. A method according to claim 7, wherein the thermoplastic elastomer is a thermoplastic urethane elastomer.

9. A method according to claim 3, wherein the composition containing the elastomer component contains carbon black.

10. A method according to claim 3, wherein the composition containing the elastomer component contains a crosslinking agent, a crosslinking accelerator and an accelerator activator.

11. A method according to claim 3, wherein the resin layer includes a barrier layer having an oxygen permeation coefficient at 20°C and 65% RH of not more than $9.0 \times 10^{-12} \cdot cm^3 \cdot cm/cm^2 \cdot sec \cdot cmHg$.

12. A method according to claim 11, wherein the barrier layer includes any one of ethylene-vinyl alcohol copolymer, a modified ethylene-vinyl alcohol copolymer and a polyamide.

13. A method of producing a tire comprising a pair of bead portions (1), a pair of sidewall portions (2), a tread portion

(3) communicating with both the sidewall portions, a carcass (4) toroidally extending between the bead portions to reinforce said portions (1, 2, 3), and a belt (5) disposed on an outside of a crown portion of the carcass in a radial direction, **characterized in that** an innerliner (6) for a tire produced by a method as claimed in claim 3 is disposed in an inner face of the tire inside the carcass.

**Patentansprüche**

1. Innenauskleidung für einen Reifen, die durch Laminieren einer Zusammensetzung, die eine Elastomerkomponente enthält, die aus einem Elastomer auf Dienbasis besteht, auf eine Harzschicht und daraufhin Strahlen von Energiestrahlen, die zum Erzeugen einer teilweisen Vernetzung zwischen der Harzschicht und der Elastomerkomponente erforderlich sind, gebildet wird,
   wobei die Dosis des Energiestrahls 1 - 600 kGy beträgt und eine Schicht, die aus der Zusammensetzung, die die Elastomerkomponente enthält, besteht, gleichzeitig mit einem anliegenden Kautschukelement durch Vulkanisieren vernetzt wird und wobei die Elastomerkomponente eine Mischung einer Elastomerkomponente, die ein gewichtsdurchschnittliches Molekulargewicht, in Polystyrol umgewandelt, wie durch Verwenden einer Gelpermeationschromatographie (GPC) gemessen, von 1000-150.000 aufweist, und einer Elastomerkomponente, die ein gewichtsdurchschnittliches Molekulargewicht, in Polystyrol umgewandelt, wie durch Verwenden einer Gelpermeationschromatographie (GPC) gemessen, von 150.000-3.000.000 aufweist, umfasst.

2. Reifen umfassend ein Paar Wulstteile (1), ein paar Seitenwandteile (2), ein Profilteil (3), das mit beiden Seitenwandteilen in Kommunikation steht, wobei eine Karkasse (4) sich toroidal zwischen den Wulstteilen zum Verstärken der Teile (1, 2, 3) und einem Gürtel (5) erstreckt, der an einer Außenseite eines Kronenteils der Karkasse in radialer Richtung angeordnet ist, **dadurch gekennzeichnet, dass** eine Innenauskleidung (6) für einen Reifen nach Anspruch 1 an einer Innenfläche des Reifens innerhalb der Karkasse angeordnet ist.

3. Verfahren zur Herstellung einer Innenauskleidung für einen Reifen, das das Laminieren einer Zusammensetzung, die eine Elastomerkomponente enthält, die aus einem Elastomer auf Dienbasis besteht, auf eine Harzschicht und daraufhin Strahlen von Energiestrahlen, die zum Erzeugen einer teilweisen Vernetzung zwischen der Harzschicht und der Elastomerkomponente erforderlich sind, umfasst,
   wobei die Dosis der Energiestrahlen 1 - 600 kGy beträgt und eine Schicht, die aus der Zusammensetzung, die die Elastomerkomponente enthält, besteht, gleichzeitig mit einem anliegenden Kautschukelement durch Vulkanisieren vernetzt wird und
   wobei die Elastomerkomponente eine Mischung einer Elastomerkomponente umfasst, die ein gewichtsdurchschnittliches Molekulargewicht, in Polystyrol umgewandelt, wie durch Verwenden einer Gelpermeationschromatographie (GPC) gemessen, von 1000-150.000 aufweist, und einer Elastomerkomponente, die ein gewichtsdurchschnittliches Molekulargewicht, in Polystyrol umgewandelt, wie durch Verwenden einer Gelpermeationschromatographie (GPC) gemessen von 150.000-3.000.000 aufweist, umfasst.

4. Verfahren nach Anspruch 3, wobei die Energiestrahlen Elektronenstrahlen sind.

5. Verfahren nach Anspruch 3, wobei ein absoluter Wert des Unterschieds zwischen dem LP- (Löslichkeitsparameter-) Wert eines Harzes, das die Harzschicht bildet, und dem LP-Wert der Elastomerkomponente nicht mehr als 9 beträgt.

6. Verfahren nach Anspruch 3, wobei die Zusammensetzung eine Haftkraftkomponente umfasst.

7. Verfahren nach Anspruch 3, wobei die Harzschicht eine Schutzschicht umfasst, die aus einem thermoplastischen Elastomer hergestellt ist.

8. Verfahren nach Anspruch 7, wobei das thermoplastische Elastomer ein thermoplastisches Urethanelastomer ist.

9. Verfahren nach Anspruch 3, wobei die Zusammensetzung, die die Elastomerkomponente enthält, Ruß enthält.

10. Verfahren nach Anspruch 3, wobei die Zusammensetzung, die die Elastomerkomponente enthält, ein Vernetzungsmittel, einen Vernetzungsbeschleuniger und einen Beschleunigeraktivator enthält.

11. Verfahren nach Anspruch 3, wobei die Harzschicht eine Barriereschicht umfasst, die einen Sauerstoffpemeationskoeffizienten bei 20 °C und 65 % RF von nicht mehr als 9,0 x 10-12 $cm^3 \cdot cm/cm^2 \cdot sec \cdot cmHg$ aufweist.

**12.** Verfahren nach Anspruch 11, wobei die Barriereschicht irgendeines von einem Ethylen-Vinylalkohol-Copolymer, einem modifizierten Ethylen-Vinylalkohol-Copolymer unter einem Polyamid umfasst.

**13.** Verfahren zur Herstellung eines Reifens, umfassend ein Paar Wulstteile (1), ein Paar Seitenwandteile (2), ein Profilteil (3), das mit beiden Seitenwandteilen in Kommunikation steht, wobei eine Karkasse (4) sich toroidal zwischen den Wulstteilen zum Verstärken der Teile (1, 2, 3) und einem Gürtel (5) erstreckt, der an einer Außenseite des Kronenteils der Karkasse in radialer Richtung angeordnet ist, **dadurch gekennzeichnet, dass** eine Innenauskleidung (6) für einen Reifen, die nach einem Verfahren nach Anspruch 3 hergestellt wird, an einer Innenfläche des Reifens innerhalb der Karkasse angeordnet ist.

**Revendications**

**1.** Garniture intérieure destinée à un pneumatique formée par stratification d'une composition contenant un composant élastomère composé d'un élastomère à base de diène sur une couche de résine et ensuite par l'exposition à un rayonnement de faisceaux d'énergie requise pour produire une réticulation partielle entre la couche de résine et le composant élastomère,
où la dose du faisceau d'énergie est 1 à 600 kGy et une couche fabriquée à partir de la composition contenant le composant élastomère est co-réticulée avec un élément de caoutchouc adjacent par vulcanisation et où le composant élastomère comprend un mélange d'un composant élastomère ayant un poids moléculaire moyen en poids converti en polystyrène tel que mesuré en utilisant une chromatographie de perméation sur gel (CPG) de 1 000 à 150 000 et un composant élastomère ayant un poids moléculaire moyen en poids converti en polystyrène tel que mesuré en utilisant une chromatographie de perméation sur gel (CPG) de 150 000 à 3 000 000.

**2.** Pneumatique comprenant une paire de portions talons (1), une paire de portions flancs (2), une portion bande roulement (3) communiquant avec les deux portions flancs, une carcasse (4) s'étendant de manière toroïdale entre les portions talons pour renforcer lesdites portions (1, 2, 3), et une courroie (5) disposée sur un extérieur d'une portion formant couronne de la carcasse dans un sens radial, **caractérisé en ce qu'**une garniture intérieure (6) destinée à un pneumatique telle que revendiquée selon la revendication 1 est disposée en une face interne du pneumatique à l'intérieur de la carcasse.

**3.** Procédé de production d'une garniture intérieure destinée à un pneumatique, qui comprend la stratification d'une composition contenant un composant élastomère composé d'un élastomère à base de diène sur une couche de résine et ensuite l'exposition à un rayonnement de faisceaux d'énergie requise pour produire la réticulation partielle entre la couche de résine et le composant élastomère,
où la dose des faisceaux d'énergie est de 1 à 600 kGy et une couche constituée de la composition contenant le composant élastomère est co-réticulée avec un élément de caoutchouc adjacent par vulcanisation et,
le composant élastomère comprenant un mélange d'un composant élastomère ayant un poids moléculaire moyen en poids converti en polystyrène tel que mesuré en utilisant une chromatographie de perméation sur gel (CPG) de 1 000 à 150 000 et d'un composant élastomère ayant un poids moléculaire moyen en poids converti en polystyrène tel que mesuré en utilisant une chromatographie de perméation sur gel (CPG) de 150 000 à 3 000 000.

**4.** Procédé selon la revendication 3, dans lequel les faisceaux d'énergie sont des faisceaux d'électrons.

**5.** Procédé selon la revendication 3, dans lequel une valeur absolue de la différence entre la valeur SP (paramètre de solubilité) d'une résine constituant la couche de résine et la valeur SP du composant élastomère n'est pas supérieure à 9.

**6.** Procédé selon la revendication 3, dans lequel la composition contient un composant à adhérence instantanée.

**7.** Procédé selon la revendication 3, dans lequel la couche de résine comprend une couche de protection constituée d'un élastomère thermoplastique.

**8.** Procédé selon la revendication 7, l'élastomère thermoplastique étant un élastomère d'uréthane thermoplastique.

**9.** Procédé selon la revendication 3, la composition contenant le composant élastomère contenant du noir de carbone.

**10.** Procédé selon la revendication 3, la composition contenant le composant élastomère contenant un agent de réticulation, un accélérateur de réticulation et un activateur accélérateur.

11. Procédé selon la revendication 3, dans lequel la couche de résine comprend une couche formant barrière ayant un coefficient de perméation de l'oxygène à 20°C et 65 % d'HR de pas plus de 9,0 x 10-12 cm$^3$•cm/cm$^2$•sec•cmHg.

12. Procédé selon la revendication 11, dans lequel la couche formant barrière comprend n'importe lequel d'un copolymère d'éthylène-alcool de vinyle, d'un copolymère d'éthylène-alcool de vinyle modifié et d'un polyamide.

13. Procédé de production d'un pneumatique comprenant une paire de portions talons (1), une paire de portions flancs (2), une portion bande roulement (3) communiquant avec les deux portions flancs, une carcasse (4) s'étendant de manière toroïdale entre les portions talons pour renforcer lesdites portions (1, 2, 3), et une courroie (5) disposée sur un extérieur d'une portion formant couronne de la carcasse dans un sens radial, **caractérisé en ce qu'**une garniture intérieure (6) destinée à un pneumatique produite selon un procédé tel que revendiqué selon la revendication 3 est disposée dans une face interne du pneumatique à l'intérieur de la carcasse.

EP 2 058 359 B1

# FIG. 1

17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0640207 A
- US 20070031661 A
- JP 2007276235 A
- EP 1818187 A